# EUROPEAN PATENT SPECIFICATION

(11) **EP 1 013 145 B1**
(45) Date of publication and mention of the grant of the patent: **05.02.2003**
(21) Application number: 98904302.1
(22) Date of filing: 17.02.1998
(51) Int. Cl.: H05B 1/02, H05B 3/82, A47J 27/21

(54) **ELECTRIC HEATERS**
ELEKTROWÄRMEGERÄTE
ORGANES DE CHAUFFE ELECTRIQUES

(30) Priority: 17.02.1997 GB 9703273
(43) Date of publication of application: 28.06.2000
(73) Proprietor: STRIX LIMITED, Ronaldsway, Isle of Man IM9 2RG (GB)
(72) Inventor: TAYLOR, John, Crawshaw, Isle of Man IM9 1HA (GB); MEEKS, Alan, Michael, George, Basingstoke Hampshire RG24 8XX (GB); ELLA, John, Berkshire RG41 2TR (GB)
(74) Representative: Leckey, David Herbert
(86) International application number: GB9800489
(87) International publication number: WO98036616

(56) References cited:
- DE-A- 3 833 293
- DE-A- 4 028 354
- GB-A- 2 079 057
- US-A- 3 715 567
- US-A- 4 555 686

## Description

The present invention relates to an electric heater assembly for a liquid heating apparatus and a thermally sensitive control unit for use therewith.

Until quite recently, and particularly in the United Kingdom, liquid heating vessels such as kettles and hot water jugs were normally provided with heaters in the form of sheathed heating elements which extended into the vessel through an opening in the side wall or the base of the vessel. Such elements are, however, prone to 'furring' in hard water areas, are difficult to clean, and also make the inside of the vessel more difficult to clean.

In other countries most especially in continental Europe, it has been more common to produce liquid heating vessels with sheathed heating elements attached to the external surface of the base of the vessel, for example through a thermal diffusion plate. Such an arrangement which is exemplified in EP 574310, has the advantage that the element is hidden from view and the inside of the vessel may be cleaned more easily.

Quite recently however, it has been proposed to use so-called "thick film" heaters in liquid heating vessels. These heaters comprise an electrically resistive heating track deposited, for example printed, on an electrically insulating substrate provided typically on a metallic support plate. In liquid heating vessels the metallic support plate may be the base of the vessel itself, or a plate for mounting in the base of the vessel. Examples of such heaters are shown, for example in WO96/18331 and WO96/17497.

Typically the thick film heating track has a tortuous path terminating in a pair of terminals through which power is supplied to the track. The power is normally supplied via a thermally sensitive control unit which acts to open a set of contacts in the controls unit to disconnect the power supply to the track in the event, for example, that the heater overheats.

The thermally sensitive control may, for example, comprise an overheat protection control which operates in the event that the heater overheats and/or a boiling control which operates in the event that liquid in a liquid heating vessel boils. In either event, the control may comprise a thermally sensitive actuator, such as a bimetallic actuator, which is arranged in good thermal contact with a portion of the heater or the liquid in the vessel.

A problem which arises with such arrangements is that during heating and cooling the heater, which is normally generally planar, deforms due to the different coefficients of expansion of its metal support plate and the electrically insulating layer provided on it. To overcome this problem and to ensure good thermal contact with the heater during operation it has been proposed to mount controls directly to the heater, for example using studs welded onto the heater, so that the whole control will move with the heater. However such arrangements are complicated to manufacture and thus expensive and, furthermore, the mounting areas take up heating space.

Alternatively thermally sensitive switch units including an actuator and switch contacts have been resiliently biased against the heater. This is expensive as the leads to the control need to be flexible to take up the movement.

In yet a further proposal, as shown in GB-A-2283156 mentioned above, a thermally deformable plastics carrier for a bimetallic actuator is resiliently biased against a part of the heater. In this arrangement, however, only a relatively small central region of the actuator is in contact with the heater. Furthermore, the biasing is intended primarily to pre-load a back-up protection mechanism which operates in the event that the bimetallic actuator fails to operate. The biasing force produced is quite substantial and if transmitted directly to the actuator could adversely interfere with its operation.

The present invention seeks to overcome this problem, and provides a thermally sensitive control unit for interrupting the electrical supply to a thick film electric heater forming, or forming a part of the base of a water boiling vessel in the event of said heater overheating, said control unit comprising a thermally sensitive bimetallic actuator mounted to the control unit by a resilient carrier, the actuator being mounted to and carried by said carrier and said carrier being mounted to a mounting location on said control unit such that in use the thermally sensitive actuator is resiliently biased against said heater by said carrier so as to accommodate deformation of the heater during operation and relative movement of the mounting location and the heater, said resilient bias being light so as not adversely to interfere with the operation of the actuator.

In this way, the spring force biasing the actuator into contact with the heater can be set to produce the requisite biasing force without interfering with the operation of the actuator. Furthermore, the resilient mounting will be able to accommodate deformation of the heater and mounting tolerances.

Any suitable spring may be used as the resilient carrier to mount the actuator but preferably a leaf spring is used. In a particularly preferred embodiment, a frame-like spring is used.

Typically the biasing force is arranged to be less than 100g, more preferably less than 50g.

Preferably the mounting is such that the actuator engages with the heater substantially around the whole periphery of the actuator, so as to give better thermal contact with the heater.

The actuator is a bimetallic actuator, most preferably a snap acting bimetallic actuator, for example of the type disclosed in GB 1542252. Such actuators are formed with a central cut out which defines a tongue, and preferably the actuator is mounted to the control unit by a leaf spring engaging with the tongue.

Whilst the invention has been described with reference primarily to liquid heating vessels such as kettles and jugs, it will be appreciated that it will find application in other liquid heating apparatus such as shower heaters, dishwashers and washing machines.

It will be appreciated that the invention extends to liquid heating apparatus including a control or an assembly in accordance with the invention, more particularly to such apparatus wherein the control is mounted under the base of the apparatus, more particularly to a heater forming or forming a part of the base of a liquid heating vessel.

From a further aspect, therefore, the invention provides a heater assembly in or for a liquid heating apparatus comprising a thick-film electric heater and the thermally sensitive control unit according to claim 1.

As has been mentioned above heaters are now typically formed on a plate for mounting in the base of a vessel, for example a plastics vessel, and on which the thick film or sheathed element is provided. It has proved particularly difficult to provide satisfactory mounting of a heater plate in the base of a plastics vessel, since it is difficult to provide a sufficient depth of plastics material into which to secure fixing means such as screws. In the preferred embodiment of the present invention, the control is mounted to the vessel body as to clamp the plate between the control and the vessel, with sealing means interposed between the heater and the vessel.

To this end, the base of the vessel is provided with a number of mounting bosses over which locate a number of bores provided around the periphery of the control. One end of each bore engages the heater around the base of the boss, and clamping screws or the like tighten against the other end of the bore. This mounting arrangement allows a greater depth of mounting boss to be provided on the vessel, thereby improving the clamping force attainable.

A preferred embodiment of the invention will now be described by way of example only, with reference to the accompanying drawings in which:-
Figure 1 is a perspective view of a control unit embodying the invention looking at the face of the control which in use will engage the face of the heater;
Figure 2 is an exploded view of the control unit of Figure 1 showing how the control unit is positioned against a heater;
Figure 3 is a view of one side of the trip lever of the control unit of Figure 1;
Figure 4 is a view of the other side of the trip lever;
Figure 5 is a sectional view along the line V-V of Figure 1 showing the control unit mounted to a heating plate and in a first operative condition;
Figure 6 is a sectional view along the line V-V of Figure 1 in a second operative condition of the control unit;
Figure 7 shows the control unit and heater mounted to the base of a liquid heating vessel, with the vessel upturned; and
Figure 8 shows a section along line VIII-VIII of Figure 7.

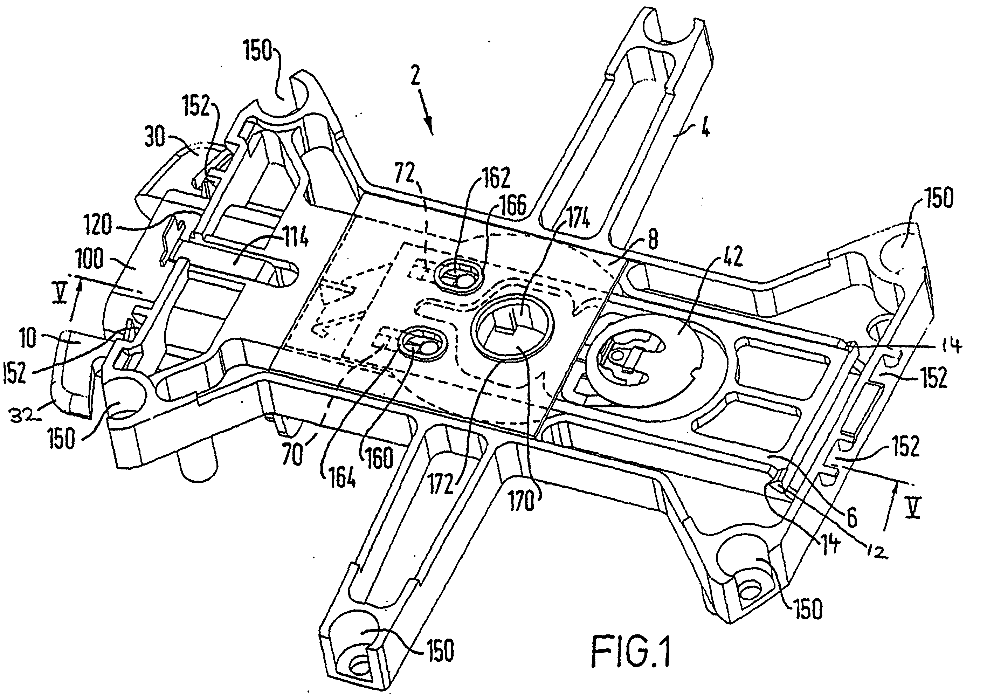

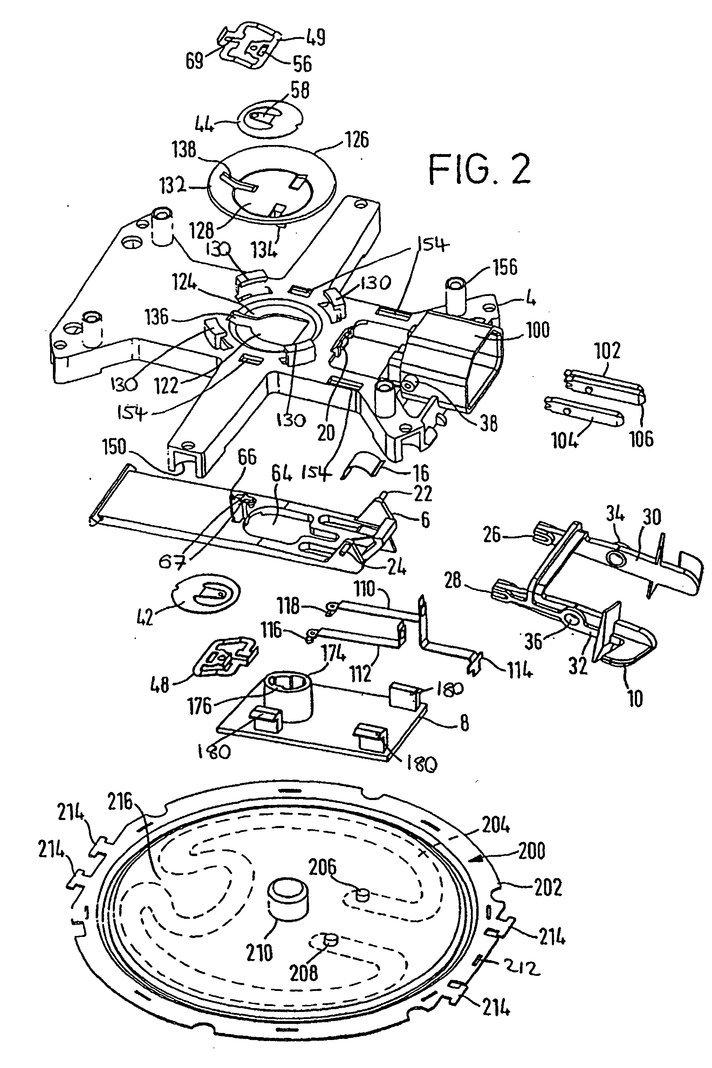

With reference to Figures 1 and 2, a control unit 2 embodying the invention comprises four main moulded plastics parts namely a tray-like body part 4, a trip lever 6, a cover plate 8 and a knob moulding 10.

The control is intended for use with a thick film heater 200 having a stainless steel plate 202 on which is deposited an insulating glass layer (not referenced), on top of which is a tortuous heating track 204. The heating track 204 is provided with a pair of contacts 206, 208 through which power may be supplied to the track. For purposes which will be described further below, the plate 202 is provided with a central sump 210 which may be formed as a separate part and joined to the plate, for example, by discharge welding.

It should be noted that for ease of explanation, the control unit 2 heater is shown upside down in Figures 2, 5, 6, 7 and 8.

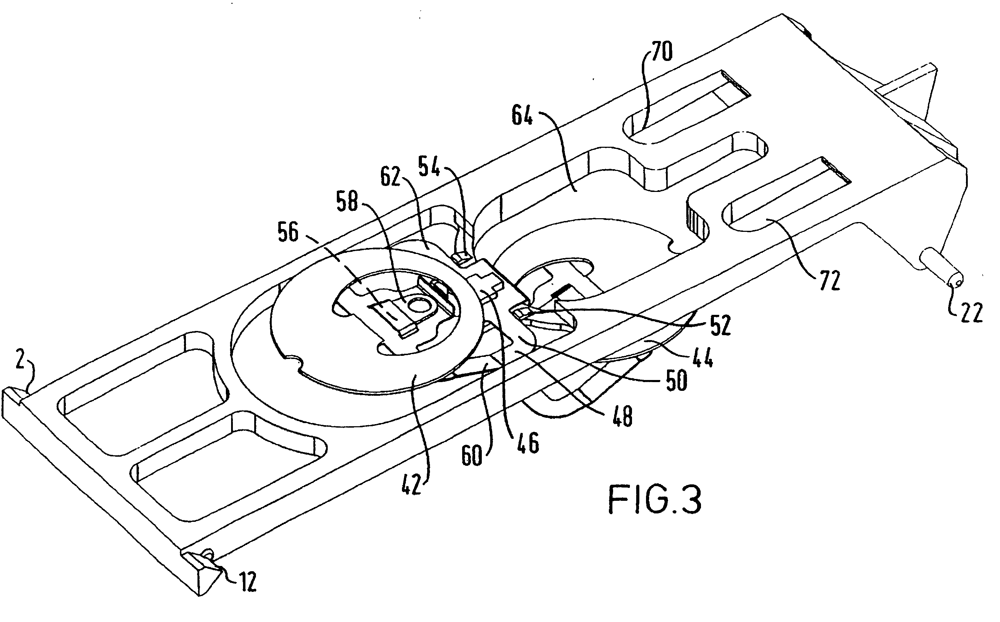

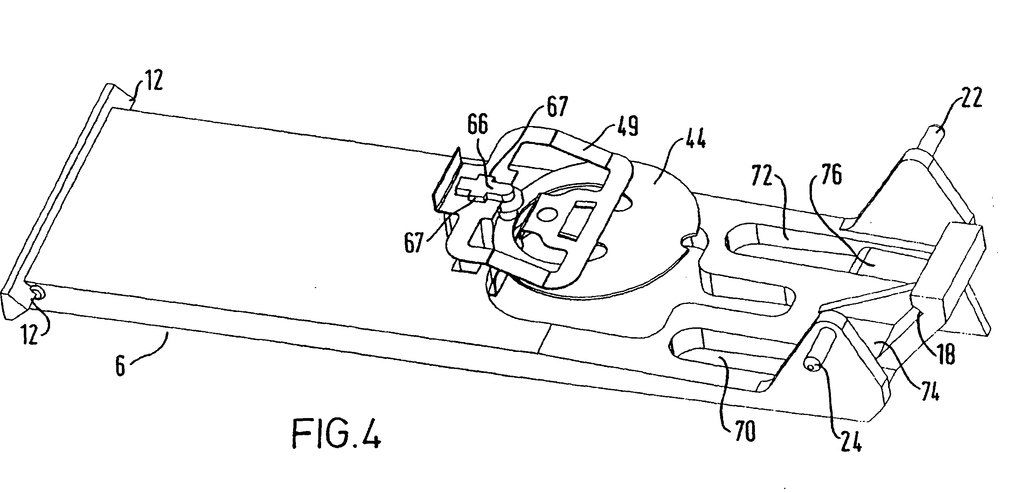

Returning to the control unit, the trip lever 6 (some of whose detail is shown in phantom lines in Figure 1 and which is described more fully in Figures 3 and 4) is pivotally mounted at one of its ends to one end of the body 4 via knife edges 12 which engage in corresponding V-grooves 14 provided in the control body 4. The trip lever 6 is an over centre mechanism which is biased between two stable position by a C-spring 16 mounted between V grooves 18, 20 provided in the trip lever 6 (see Fig. 4) and body control body 4 (Fig. 2) respectively. The C-spring 16 also acts to bias the knife edges 12 into the grooves 14 on the body part 4.

At its end remote from its pivotal mounting to the control body part 4, the trip lever 6 is provided with a pair of laterally extending pins 22, 24 which are received in slots 26, 28 provided in one end of the generally U-shaped knob moulding 10 whose arms 30, 32 in use extend outside the base of the vessel for manipulation by a user. The arms 30, 32 are provided with journals 34, 36 which fit over mounting bosses 38, 40 provided on the body part 4. This will allow the knob moulding 10 to pivot in the opposite direction to the movement of the trip lever 6.

The trip lever also mounts a pair of snap-acting bimetallic actuators 42, 44 of the type described in GB-A-1542252.

The first bimetallic actuator 42, which constitutes an overheat protection actuator, is mounted on a pillar 46 provided on the side of the trip lever 6 which, in use faces the heater 200. As shown more clearly in Figure 3, the actuator 42 is mounted to the pillar 44 via a frame-like spring 48 having a first end 50 which engages over the pillar 46 and which clicks into position under a pair of lugs 52, 54, and a second end with an opening 56 through which extends the central tongue 58 of the actuator 42. The side arms 60, 62 of the spring 48 act resiliently to bias the periphery of the actuator 42 against the heater 200 as will be described further below.

The trip lever 6 is also provided with an aperture 64 through which, in use, the sump 210 of the heater extends. A second pillar 66 is provided on the other side of the trip lever 6 adjacent the aperture 64, and which mounts the second bimetallic actuator 44. To this end, the pillar 66 has a pair of laterally extending lugs 67 under which a slot 69 in spring 49 (see Fig. 2) may engage. As will be described further below, this actuator 44 will, in use, sense when liquid in a vessel boils.

Finally, the trip lever arm 6 is also provided with a pair of slots 70, 72 and a pair of contact lifting surfaces 74, 76.

Turning now to the control body 4, this is moulded with an inlet 100 for a power cord (not shown), the inlet receiving line, neutral and earth terminal pins 102, 104, 106 in a standard configuration. The pins 102, 104, 106 extend through the rear wall 108 of the inlet and are riveted to respective leaf springs 110, 112, 114. The leaf springs 110, 112 which are connected to the live or neutral pins 102, 104 mount contacts 116, 118 which, will make contact with the fixed contacts 202, 204 provided on the heater 200. The earth leaf spring 114 is bent around the inlet 100 and has a tongue 120 for earthing engagement with a slot 212 in the heater plate.

The control body 4 has a central aperture 122 in which provides access to the sump 210 of the heater. The aperture 122 is surrounded by a flange 124 which receives a dished copper mounting plate 126 having a central planar bottom 128 and an inclined periphery 132. The flat bottom 128 rests on the flange 124, and the plate 126 is retained in position on the sump by a plurality of legs 134 pressed out from the plate 126.

A plurality of lugs 130 retain the plate 126 on the control body 4.

The bottom 128 of the plate 126 acts as a mounting location for the bimetallic actuator 44. To facilitate this, the aperture 122 in the body 4 is extended into a slot 136, and the plate is provided with a slot 138 through which the mounting pillar 66 for the actuator 42 may pass.

The control body 4 is also provided with a number of bores 150 arranged around its periphery for mounting to the bottom of a vessel. The bores 150 have a closed end 153 against which a fastener such as a screw may clamp, and the other end of the bore engages with the heater, as will be described further below. Also, it is provided with four grooves 152 into which T-shaped tongues 214 of the heater 200 may be folded in order correctly to position the control with respect to the heater 200.

A number of bosses 156 are also provided on the control body 4 for mounting a cover moulding to the vessel.

Finally, the control body 4 has four slots for receiving mounting clips 180 of the cover plate 8.

Turning to the cover plate 8, this is generally planar, but with a number of apertures and upstanding features.

Firstly, it has a pair of apertures 160, 162 (not shown in Fig. 2) behind which are arranged the line and neutral contacts 116, 118 of the control. In the unmounted state, the contacts may be positioned within, or may protrude slightly from the apertures 160, 162 depending on the size of the contacts provided on the heater. The arrangement should be such that upon assembly, the respective contacts engage with one another with a sufficient contact force.

The spring leaves mounting the contacts 116, 118 may engage the inner edge of the apertures 160,162 to set the position of, and pre-load, the contacts 116,118 prior to mounting to the heater.

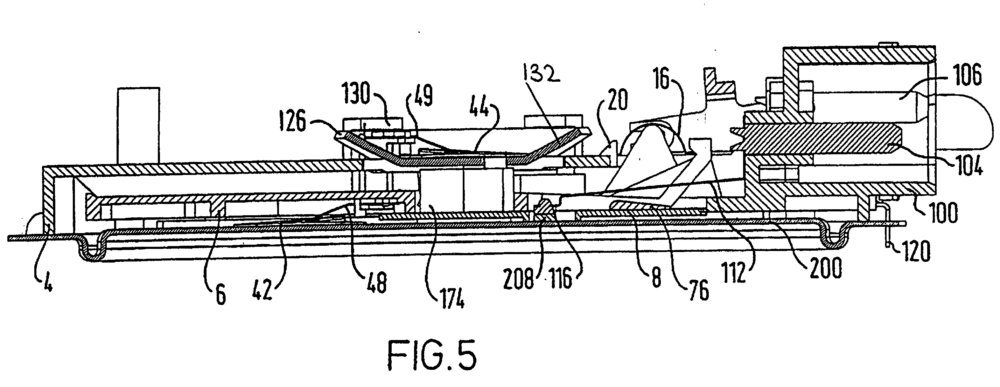

Respective rims 164, 166 are raised around the apertures 160, 162 for engagement with the surface of the heater. The apertures 160, 162 and the rims 164, 166 form an enclosure around the contacts in use, as shown in Figure 5, for example to shield the heater and other parts of the control from arcing.

The cover plate 8 has a larger aperture 170 through which the sump 210 of the heater can extend. A rim 172 of the same height as the rims 164, 166 is raised around the aperture 170 on the heater-facing side of the cover plate for engagement with the surface of the heater 200. On the other side of the cover plate 8 a generally cylindrical wall 174 is raised which in use extends around the sump 210 of the heater 200, so as to shield the sump from arcing. The internal surface of the wall 174 is provided with grooves 176 to accommodate the legs of the mounting plate 126 fitting over the sump.

Finally, the cover plate 8 is provided with four clips 180 which engage in the slots 154 in the control body 4.

To assemble the described control unit, the terminal pins 102, 104, 106, the leaf springs 110, 112, 114 and the copper plate 126 are first mounted to the control body 4. The mounting plate 126 is then clipped in behind the lugs 130 so as to form a first sub-assembly. The first bimetallic actuator 42 is then mounted to the pillar 46 of the trip lever 6 via the spring 48 to form a second sub-assembly. These subassemblies are then assembled together such that the mounting pillar of the second bimetallic actuator 44 extends through the apertures 136, 138 in the body 4 and plate 126 respectively and such that the leaf springs 110, 112 lie over the contact lifting surfaces 74 of the trip lever, with the line and neutral contacts 116, 118 extending through the apertures 72 in the trip lever arm 6. The knife edges 12 of the trip lever are positioned in the corresponding grooves 14 in the control body 4 and the C-spring 16 then snapped into position between the grooves 18, 20.

Then, the second bimetallic actuator 44 may be mounted to the pillar 66 of the trip lever arm 6 via the spring 49 which biases it lightly against the mounting plate 126. The knob moulding 10 then mounted to the control body 4 with its end slots 22, 24 engaging the pins 18, 20 of the trip lever.

Finally, the cover plate 8 is snapped into position over the trip lever 6 by pushing the clips 180 into the slots 154 in the control body 4.

In this condition the control unit 2 may be mounted to the heater 200. The grooves 152 on the control body 4 can be aligned with the tongues 214 on the heater plate 202 and the control offered up to the heater plate 202 to the extent that the rims around the apertures in the cover plate 8 engage the surface of the heater 200. During mounting, the legs 134 of the copper plate 126 engage over the sump 210 of the heater 200. The lugs 130 of the control body 4 urge the plate 126 fully into thermal contact with the sump 210.

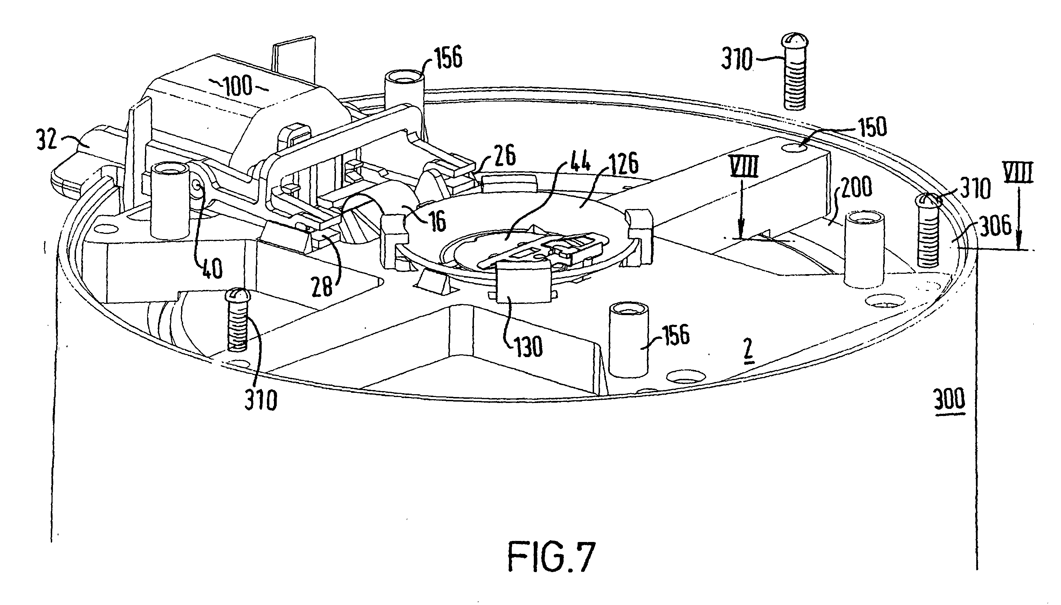

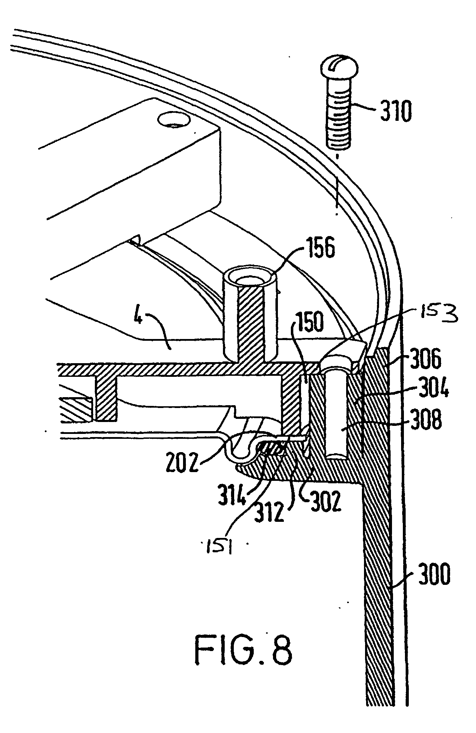

At the same time, the first bimetallic actuator 42 is brought into a lightly biased contact with a region 216 of the heater 200, and the contacts 116, 118 brought into contact with the fixed contacts 206, 208 on the heater track as shown in Figure 5. As both the actuator 42 and the contacts 110, 112 are resiliently mounted, they may accommodate assembly tolerances and still maintain adequate contact with the heater 200, and also accommodate any movement of the heater during operation. As stated above, the second bimetallic actuator 44 is biased lightly by spring 49 into contact with the bottom 128 of the copper plate 126. The control 2 can then be fixed in position on the plate 202 by turning over the tongues 214 into the grooves 152. This assembly may then be mounted in the base of a liquid heating vessel, as shown in Figures 7 and 8.

With reference to Figures 7 and 8, a plastics liquid heating vessel 300 is provided with an inwardly facing flange 302 in its base. A plurality of mounting bosses 304, equal in number to the number of bores 150 on the control body 4, are provided on the outer edge of the flange 302, adjacent the lower wall 306 of the vessel 300. Each boss 304 has a bore 308 for receiving a fastener such as a self tapping screw 310.

Radially inwardly of the bosses 304 is a raised ring 312 against which the periphery of the heater plate 202 rests. A seal 314 is compressed between the flange 302 and the plate 202 inwardly of the ring 312.

As can be seen from Figure 8, a bore 150 of the control body 4 engages over a boss 304. The lower edge 151 of the bore 150 engages on the plate 202 and when screwed down by the fastener 310 will clamp the plate 202 to the flange 304 via the seal 312. It will be seen that the boss 304 provides a significant depth of material into which the fastener 310 can be screwed, thereby improving retention of the heater 200 on the vessel 300.

Operation of the assembled control will now be described.

In the operating condition shown in Figure 5, the trip lever 6 is in a position in which the movable contacts 116, 118 of the control unit 2 resiliently engage the fixed contacts 204, 206 of the heater 200. Also, the overheat sensitive bimetallic actuator 42 is lightly biased into contact with a portion 216 of the heater 200, by the spring 48 and the boiling sensitive actuator lightly biased into contact with the base 128 of the copper plate 126, which is itself in intimate thermal contact with the bottom of the sump 210.

During normal operation of the vessel 300, liquid in the vessel will heat, and the heater stay relatively cool due to heat transfer to the liquid. The temperature a the small volume of liquid trapped in the sump 210 will lag behind the temperature of the rest of the liquid in the vessel, being relatively isolated from the heating means. However once liquid in the vessel 300 begins to boil, the cooler liquid in the sump is displaced due to the vigorous convection occurring and the temperature of the liquid rises rapidly to that of the surrounding liquid. This temperature is transmitted through the sump into the plate 126 and in turn to the boiling sensitive bimetallic actuator 44. When the actuator 44 reaches its design operating temperature (say 95°C), it will reverse its curvature with a snap action. The actual operating temperature of the actuator 44 may be determined empirically depending for example on the desired boiling time, the thermal capacity of the plate 126 and so on.

One part of the periphery of the actuator 44 reacts against the plate 126, causing the other end to move into contact with an overhanging nose of the pillar 66, thereby lifting the pillar 66. As the pillar 66 is lifted, the trip lever 6 pivots to the point where the C-spring 12 goes over centre, causing the trip lever to move to open the contacts 116, 118, 206, 208 with a snap action. Both sets of contacts are opened by more than 3 mm, so that the control provides a true "off" condition for the heater.

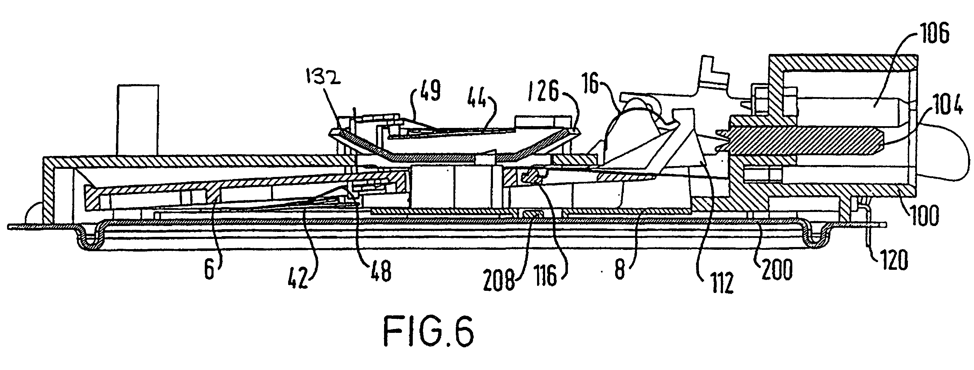

The trip lever 6 ends up in the position shown in Figure 6 from which it will be seen that not only have the contacts opened, but also the actuator 44 has moved out of thermal contact with the plate 126. This allows the actuator 44 to cool and assume its original curvature relatively quickly, thereby facilitating rapid resetting of the control which can be achieved through moving the knob 26 upwardly. Rapid resetting of the control after boiling is also facilitated by the copper plate 126 which acts as a radiator drawing heat out of the sump 210. This allows the sump temperature to drop relatively quickly so that when the reset actuator 42 is brought back into contact with the plate 126, it does not operate once again.

In the event that the boiling sensitive bimetallic actuator 44 fails to operate, so that the vessel 300 boils dry, or if the vessel 300 is switched on without any liquid in it, the temperature of the heater 200 will rise rapidly. Heat will be transmitted to the overheat actuator 42 from the heater region 216 and at a predetermined temperature (higher than that of the boiling sensitive actuator 42) the actuator 42 will reverse its curvature with a snap action. A peripheral part of the actuator will react against the heater plate 202 causing another part of the actuator to engage a part of the mounting pillar 44, to lift the trip lever 6 past the over centre position of the C-spring 12, to open the contacts, as described above.

The control may be reset once the actuator 40 and heater 200 have cooled sufficiently. As will be seen from Figure 6, the actuator 42 is lifted out of contact with the heater 200 thereby accelerating its resetting.

As will be seen particularly from Figure 5, the apertures 160, 162 in the cover plate 8 surround the contact pairs so that when the contacts make and break, the surrounding parts of the heater and control are shielded to some degree from any arcing which may occur. Furthermore, the cylindrical wall on the cover plate 8 will prevent arcing to the sump 210.

The preferred embodiment of the invention has been described primarily with reference to thick film heaters. A third level of protection, or back up protection, operable in the event that the overheat protection described above fails to operate may be provided in the heater itself. This may be achieved, for example, by providing sections of the track which will rupture preferentially in a severe overheat condition. Alternatively, glass bridges or a glass covering may be provided between respective terminal sections of the track, these bridges becoming conductive at higher temperatures thereby acting to short out the track.

It will be appreciated that the invention in its various aspects will allow significant cost reductions compared to existing controls. In particular, the use of a contact on a thick film heater as one of a set of switch contacts represents a significant cost saving.

## Claims

1. A thermally sensitive control unit (2) for interrupting the electrical supply to a thick film electric heater (200) forming, or forming a part of the base of a water boiling vessel in the event of said heater overheating, **characterised in that** said control unit comprises a thermally sensitive bimetallic actuator (42) mounted to the control unit by a resilient carrier (48), the actuator being mounted to and carried by said carrier and said carrier being mounted to a mounting location on said control unit such that in use the actuator is resiliently biased against said heater by said carrier so as to accommodate deformation of the heater during operation and relative movement of the mounting location and the heater, said resilient bias being light so as not adversely to interfere with the operation of the actuator.

2. A control unit as claimed in claim 1 wherein the resilient carrier comprises a leaf spring.

3. A control unit as claimed in claim 1 wherein the resilient carrier comprises a frame-like spring.

4. A heater assembly in or for a liquid heating apparatus comprising a thick film heater (200) and the thermally sensitive control unit for the heater as claimed in claim 1, 2 or 3, said heater having a resistive heating track (204) having an electrical contact (206, 208) through which the electrical supply may be conducted to the track, and said control having a movable electrical contact (116, 118) which engages with the track contact, and which, upon operation of the control, moves out of engagement with the track contact to interrupt the electrical supply to the track.

5. An assembly or control unit as claimed in any preceding claim wherein the actuator is mounted such that the actuator engages with the heater substantially around the whole periphery of the actuator.

6. An assembly or control unit as claimed in any preceding claim wherein said actuator comprises a snap-acting bimetallic actuator.

7. An assembly or control unit as claimed in any preceding claim wherein said thermally sensitive actuator is movably mounted with respect to a control body for engagement with a portion of the heater such that upon operation of the actuator, the actuator is moved out of thermal contact with that portion of the heater.

## Patentansprüche

1. Wärmesensitive Steuer-/Regeleinheit (2) für die Unterbrechung der Stromzufuhr zu einer die Basis oder einen Teil der Basis eines Wasserkochers bildenden Dickfilm-Elektroheizeinrichtung (200) im Fall einer Überhitzung der Elektroheizeinrichtung, **dadurch gekennzeichnet, dass** die Steuer/Regeleinheit einen durch einen elastischen Träger (48) an der Steuer/Regeleinheit befestigten wärmesensitiven Bimetall-Betätiger (42) umfasst, wobei der Betätiger an dem Träger montiert ist und von dem Träger getragen wird und der Träger an einem Befestigungsort an der Steuer/Regeleinheit auf solche Weise befestigt ist, dass bei Gebrauch der Betätiger durch den Träger elastisch gegen die Heizeinrichtung vorgespannt wird, um eine Verformung der Heizeinrichtung während des Betriebs und eine relative Bewegung des Befestigungsortes und der Heizeinrichtung zu kompensieren, wobei die elastische Vorspannung derart leicht ist, dass sie den Betrieb des Betätigers nicht beeinträchtigt.

2. Steuer-/Regeleinheit nach Anspruch 1, wobei der elastische Träger eine Blattfeder umfasst.

3. Steuer-/Regeleinheit nach Anspruch 1, wobei der elastische Träger eine rahmenartige Feder umfasst.

4. Heizeinrichtungsanordnung in einem oder für ein Gerät zum Erwärmen von Flüssigkeiten, umfassend eine Dickfilm-Heizeinrichtung (200) und die wärmesensitive Steuer-/Regeleinheit für die Heizeinrichtung gemäß Anspruch 1, 2 oder 3, wobei die Heizeinrichtung eine resistive Heizschiene (204) mit einem elektrischen Kontakt (206, 208) aufweist, durch welchen die Stromzufuhr zu der Schiene geleitet werden kann, und wobei die Steuerung/Regelung einen beweglichen elektrischen Kontakt (116, 118) hat, der in den Kontakt der Schiene eingreift und der sich bei Betrieb der Steuerung/Regelung außer Eingriff mit dem Kontakt der Schiene bewegt, um die Stromzufuhr zur Schiene zu unterbrechen.

5. Anordnung oder Steuer-/Regeleinheit nach einem der vorhergehenden Ansprüche, wobei der Betätiger in der Weise befestigt ist, dass er sich im wesentlichen rund um seine gesamte Peripherie mit der Heizeinrichtung in Eingriff befindet.

6. Anordnung oder Steuer-/Regeleinheit nach einem der vorhergehenden Ansprüche, wobei der Betätiger einen Bimetall-Betätiger mit Schnappfunktion umfasst.

7. Anordnung oder Steuer-/Regeleinheit nach einem der vorhergehenden Ansprüche, wobei der wärmesensitive Betätiger hinsichtlich eines Steuer/Regelkörpers für den gegenseitigen Eingriff mit einem Bereich der Heizeinrichtung beweglich montiert ist, so dass der Betätiger bei seinem Betrieb außer Wärmekontakt mit diesem Bereich der Heizeinrichtung bewegt wird.

## Revendications

1. Unité de commande (2) thermiquement sensible pour interrompre l'alimentation électrique d'un organe de chauffe électrique (200) à film épais formant ou formant une partie de la base d'un récipient d'ébullition d'eau en cas de surchauffe dudit organe de chauffe, **caractérisé en ce que** ladite unité de commande comprend un actionneur (2) bimétalique thermiquement sensible monté sur l'unité de commande par un support élastique (48), l'actionneur étant monté sur et porté par ledit support et ledit support étant monté en un emplacement de montage sur ladite unité de commande de sorte que, en utilisation, l'actionneur soit sollicité de manière élastique contre l'organe de chauffe par ledit support de façon à s'adapter à une déformation de l'organe de chauffe pendant le fonctionnement et à un déplacement relatif de l'emplacement de montage et de l'organe de chauffe, ladite sollicitation élastique étant légère de façon à ne pas interférer défavorablement avec le fonctionnement de l'actionneur.

2. Unité de commande selon la revendication 1 dans laquelle le support élastique comprend un ressort à lame.

3. Unité de commande selon la revendication 1 dans laquelle le support élastique comporte un ressort en forme de cadre.

4. Assemblage d'organe de chauffe dans ou pour un appareil de chauffage à liquide comportant un organe de chauffe (200) à film épais et l'unité de commande thermiquement sensible pour l'organe de chauffe selon la revendication 1, 2 ou 3, ledit organe de chauffe comprenant une piste de chauffe résistante (204) présentant un contact électrique (206, 208) par lequel l'alimentation électrique peut être conduite jusqu'à la piste, et la dite unité de commande ayant un contact électrique déplaçable (116, 118) qui engage le contact de la piste et qui, lors du fonctionnement de l'unité de commande, se dégage du contact de la piste pour interrompre l'alimentation électrique de la piste.

5. Assemblage ou unité de commande selon l'une quelconque des revendications précédentes dans lequel l'actionneur est monté en sorte que l'actionneur engage l'organe de chauffe sensiblement autour de toute la périphérie de l'actionneur.

6. Assemblage ou unité de commande selon l'une quelconque des revendications précédentes dans lequel ledit actionneur comprend un actionneur bimétalique instantané.

7. Assemblage ou unité de commande selon l'une quelconque des revendications précédentes dans lequel ledit actionneur thermiquement sensible est monté de manière déplaçable par rapport à un corps de commande pour engagement avec une partie de l'organe de chauffe de sorte que lors du fonctionnement de l'actionneur, l'actionneur est déplacé hors de contact thermique avec cette partie de l'organe de chauffe.
